# EUROPEAN PATENT APPLICATION

(11) **EP 4 772 381 A1**
(43) Date of publication of application: **08.07.2026**
(21) Application number: 25219618.3
(22) Date of filing: 01.12.2025
(51) Int. Cl.: B60K 35/10, B60K 35/21, B60K 35/22, B60K 35/23, B60K 35/28, B60K 35/29, B60K 35/53, B60K 35/65

(54) **DISPLAY MODULE**

(30) Priority: 03.01.2025 KR 20250001111
(71) Applicant: Hyundai Mobis Co., Ltd., Gangnam-gu Seoul 06141 (KR)
(72) Inventor: KIM, Kyung Hoon, 16891 Yongin-si, Gyeonggi-do (KR); LEE, Jun, 16891 Yongin-si, Gyeonggi-do (KR); LEE, Hwang Eui, 16891 Yongin-si, Gyeonggi-do (KR); AHN, Sung Joon, 16891 Yongin-si, Gyeonggi-do (KR); AN, Hyun Jun, 16891 Yongin-si, Gyeonggi-do (KR); LEE, Shin Jik, 16891 Yongin-si, Gyeonggi-do (KR); LEE, Ung Gu, 16891 Yongin-si, Gyeonggi-do (KR); SHIN, Hae Woon, 16891 Yongin-si, Gyeonggi-do (KR)
(74) Representative: Jung, Minkyu

(57) **Abstract**

A display module includes a windshield display formed at a lower end of a windshield, a center display linked to the windshield display, and a control plate disposed in front of the center display, wherein the control plate is disposed spaced a predetermined distance apart from the front of the center display; wherein the control plate is configured to allow a user to operate the windshield display and the center display by providing an input to the control plate; and wherein the control plate is configured to select a function through a first input of the user and to adjust the corresponding selected function through a second input of the user.

## Description

### CROSS-REFERENCE TO RELATED APPLICATION

This application claims priority to and the benefit under 35 USC § 119(a) of Korean Patent Application No. 10-2025-0001111, filed on January 3, 2025, in the Korean Intellectual Property Office, the disclosure of which is incorporated herein by reference in its entirety for all purposes.

### BACKGROUND

### 1. Field

The present invention relates to a display module, and more particularly, to a display module that is easy to operate inside a vehicle.

### 2. Discussion of Related Art

Recently, as people's vehicle usage time has increased and people spend more time inside their vehicles, vehicles are being developed to provide more functions to their users.

A plurality of displays may be used inside a vehicle to easily control and display numerous functions of the vehicle. A user may operate a display to access various functions and even control the functions of a vehicle.

However, it is not easy to provide displays of sufficient sizes in the limited space inside a vehicle, and it is also difficult to operate each of the displays. Particularly, since a driver who is driving needs to operate the display while looking ahead and around the vehicle, it is important not to be distracted by operating the display.

There is a need for a display that can be implemented in a sufficient size to provide a user with various functions and a vehicle display by which the user can easily operate the display.

### SUMMARY

One embodiment of the present invention is directed to providing a display module that can be easily operated by a user.

The task to be achieved by the present invention is not limited to the task described above, and other tasks not described herein will be clearly understood by those skilled in the art from the description below. In one general aspect, a display module includes a windshield display formed at a lower end of a windshield; a center display linked to the windshield display; and a control plate disposed in front of the center display, wherein the control plate is disposed spaced a predetermined distance apart from a front of the center display; wherein the control plate is configured to allow a user to operate the windshield display and the center display by providing an input to the control plate; and wherein the control plate is configured to select a function through a first input of the user and to adjust the corresponding selected function through a second input of the user.

In some embodiments, the first input may include pressing the control plate to bring the control plate into contact with the center display.

In some embodiments, the second input may include touching a front surface of the control plate.

In some embodiments, the corresponding function may be selected by providing the first input while activating the corresponding function in the control plate by providing the second input.

In some embodiments, the windshield display may be configured to display a pop-up corresponding to an user input when the user provides the user input to the control plate.

In some embodiments, the control plate may be formed of a transparent material.

In some embodiments, the center display may be configured to display an operating portion in a region of the center display corresponding to the control plate, and the operating portion may be visible to the user through the control plate.

In some embodiments, the center display and the control plate may be disposed between a driver seat and a front passenger seat; the control plate may be configured to recognize a seating location of the user operating the control plate; and the operating portion may be configured to change its display based on the seating location of the user.

In some embodiments, the pop-up may be displayed at a location on the windshield display corresponding to a seat of the user operating the control plate.

In some embodiments, the pop-up may include an image of the control plate and a cursor indicating a location of a user input on the control plate.

### BRIEF DESCRIPTION OF THE DRAWINGS

The above and other objects, features and advantages of the present invention will become more apparent to those of ordinary skill in the art by describing exemplary embodiments thereof in detail with reference to the accompanying drawings, in which:
FIG. 1 is a view showing a display module according to an embodiment of the present invention;
FIG. 2 is a perspective view of the display module according to the embodiment of the present invention;
FIG. 3 is a cross-sectional view of the display module according to the embodiment of the present invention;
FIGS. 4 and 5 are views showing a user's input being provided to a control plate according to the embodiment of the present invention;
FIG. 6 is a view showing a state in which a pop-up is displayed when an input is provided to the control plate according to the embodiment of the present invention;
FIG. 7 is a view showing a control plate according to another embodiment of the present invention; and
FIG. 8 is a view showing a state in which a display changes in response to a user providing an input to the control plate according to another embodiment of the present invention.

### DETAILED DESCRIPTION

The present invention may be modified in various ways and has various embodiments, and specific embodiments are illustrated in the drawings and will be described in detail. However, this is not intended to limit the present invention to specific embodiments, and is to be understood to include all modifications, equivalents, or substitutions that fall within the spirit and scope of the present invention. In describing the present invention, when it is determined that a detailed description of a related known technology may obscure the gist of the present invention, the detailed description thereof is omitted.

Although the terms first, second, and the like may be used to describe various components, the above components are not limited by the above terms. The above terms are merely used to distinguish one component from another.

The terminology used in the present application is used only to describe specific embodiments and is not intended to limit the present invention. Singular expressions include plural expressions unless the context clearly indicates otherwise. In the present application, it should be understood that terms such as "includes" or "has" are intended to specify the presence of a feature, number, step, operation, component, part or combination thereof described in the specification, but do not exclude in advance the possibility of the presence or addition of one or more other features, numbers, steps, operations, components, parts or combinations thereof.

Also, throughout the specification, when "connected" is described, this does not only mean that two or more components are directly connected, but also that two or more components are indirectly connected through other components, that they are electrically connected as well as physically connected, or that they are integrally connected despite being referred to by different names depending on their location or function.

Additionally, when one component is described as being formed or disposed "above (upper) or below (lower)" another component, above (upper) or below (lower) includes not only cases where the two components are in direct contact with each other, but also cases where one or more still other components are formed or disposed between the two components. Additionally, when expressed as "above (upper) or below (lower)," it may include the meaning of not only the upward direction but also the downward direction based on one component.

Hereinafter, one embodiment of a display module according to the present invention will be described in detail with reference to the attached drawings. When describing with reference to the attached drawings, identical or corresponding components are denoted by the same reference numbers and redundant descriptions thereof are omitted.

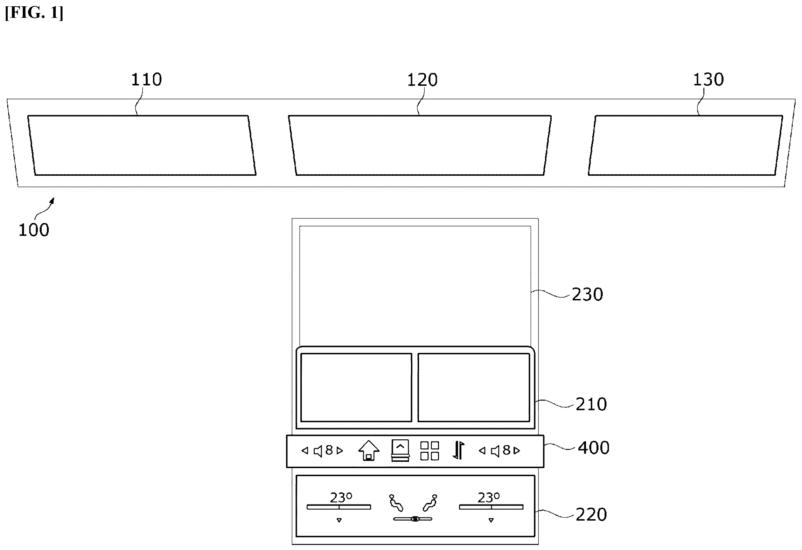

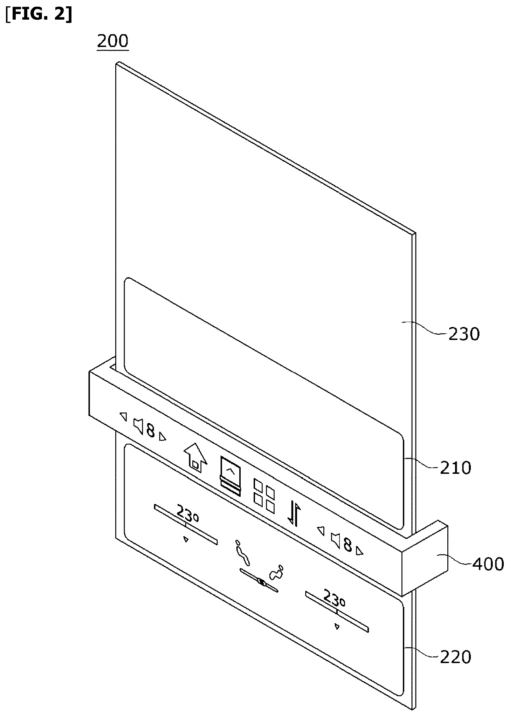

FIG. 1 is a view showing a display module according to an embodiment of the present invention, and FIG. 2 is a perspective view of the display module according to the embodiment of the present invention.

Referring to FIGS. 1 and 2, the display module according to one embodiment of the present invention may include a windshield display 100 formed at a lower end of a windshield, a center display 200 linked to the windshield display 100, and a control plate 400 disposed in front of the center display 200.

The windshield display 100 may be formed in at least one region of the windshield. In this embodiment, the windshield display 100 is shown as being formed by extending from the lower end of the windshield in a width direction of a vehicle. The windshield display 100 may extend in the width direction of the vehicle and include a plurality of display regions.

The windshield display 100 may include, for example, three display regions. The display regions may correspond to a first display region 110 to a third display region 130. The first display region 110 to the third display region 130 may be sequentially disposed in the width direction of the vehicle. In FIG. 1, the first display region 110 may disposed in front of the driver's seat, the third display region 130 may be disposed in front of the front passenger seat, and the second display region 120 may be disposed at a center of the vehicle.

The center display 200 may be disposed at the center of the vehicle. The center display 200 may be disposed on one surface of a cockpit covering the front of the vehicle. The center display 200 may perform a display function in conjunction with the windshield display 100.

The control plate 400 may be disposed on one surface of the center display 200. The control plate may be disposed spaced a predetermined distance apart from the front of the center display 200. A user may operate the windshield display 100 and the center display 200 by operating the control plate 400 and the center display 200.

It is possible to touch the center display 200 or the control plate 400. The user may provide an input by touching the center display 200 or the control plate 400. The windshield display 100 and the center display 200 may be operated based on the user's input.

The control plate 400 may cover at least a portion of the center display 200. The control plate 400 may be formed of a transparent material. For example, the control plate 400 may be formed of a transparent plastic material. In this case, a region of the center display 200 corresponding to the control plate 400 may be recognized by the user through the control plate 400. A region in the center display 200 covered by the control plate 400 may be displayed to the user through the control plate 400. The center display 200 may display an operating portion 410, and the operating portion 410 may be recognized by the user through the control plate 400.

As shown in FIG. 2, the control plate 400 may cover at least a portion of the center display 200, and may be formed to surround the center display 200. The control plate 400 may be disposed spaced a predetermined distance apart from the front of the center display 200. The control plate 400 may be pressed toward the center display 200 side and may come into contact with the center display 200. In this case, the center display 200 may recognize the contact with the control plate 400. This may correspond to another input from the user.

A first input may correspond to an action in which the user presses the front of the control plate 400 so that the control plate 400 and the center display 200 are brought into contact with each other. A second input may correspond to an action in which the user touches the front of the control plate 400.

The user may select or adjust a function displayed through the control plate 400 by providing an input to the control plate 400. For example, as shown in FIGS. 1 and 2, the control plate 400 may display a button for controlling the volume, a home button, a button for controlling the position of the center display 200, and the like. The corresponding button may be operated based on the user's first and second inputs.

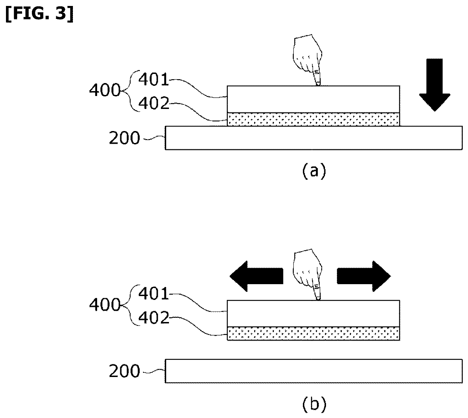

FIG. 3 is a cross-sectional view of the display module according to the embodiment of the present invention.

Referring to FIG. 3, the first input and the second input provided to the control plate 400 may be confirmed.

FIG. 3A shows the user's first input provided to the control plate 400. The user may press the front of the control plate 400 so that the control plate 400 and the center display 200 are brought into contact with each other. The center display 200 may detect whether the control plate 400 is in contact with the center display 200.

FIG. 3B shows the user's second input provided to the control plate 400. The user may provide the second input by touching the front of the control plate 400. The control plate 400 may correspond to a configuration capable of recognizing a touch. When the front of the control plate 400 is touched, the user's touch on the front of the control plate 400 may be detected, and the control plate 400 may be operated based on the user's touch position. The user may provide various inputs, such as touching, tapping, or dragging the control plate 400.

Referring to FIG. 3, the control plate 400 may be formed by laminating a transparent transmitting portion 401 and a touch film 402. The touch film 402 may be disposed on a surface of the control plate 400 facing the center display 200. The transmitting portion 401 may be formed on an upper side of the touch film 402. The transmitting portion 401 and the touch film 402 are formed of a transparent material so that the displayed content of the center display 200 passes therethrough.

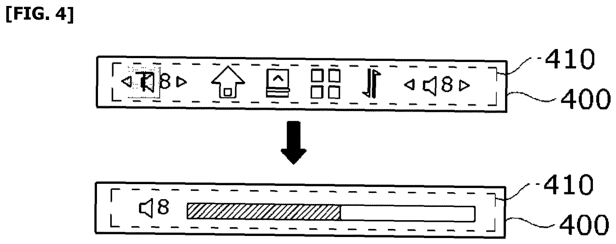

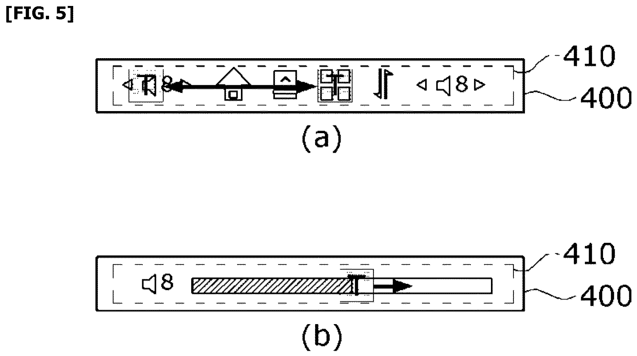

FIGS. 4 and 5 are views showing the user's input being provided to the control plate according to the embodiment of the present invention.

FIG. 4 shows a state when the first input is provided to the control plate 400. The user may provide the first input by pressing one side of the control plate 400. In the case of this embodiment, a state in which the user presses the volume control button displayed on the control plate 400 is shown. When the user's first input is provided, a volume bar for controlling the volume may be displayed.

When the volume bar is displayed, the volume bar may be operating by dragging the control plate 400. The dragging of the control plate 400 may correspond to the second input. The user may adjust the volume by touching and dragging the front of the control plate 400.

FIG. 5 shows a state when the second input is provided to the control plate 400. FIGS. 5A and 5B show two states in which the second input is implemented through the control plate 400.

FIG. 5A shows a state in which the user drags between a plurality of buttons displayed on the control plate 400. When the user touches and then drags one surface of the control plate 400, a button corresponding to the user's touch position among the plurality of buttons may be activated.

The selection of a specific button may be implemented in such a way that the activated button is selected the moment the user's fingertip is lifted from the control plate 400. Alternatively, the user may activate a specific button through the second input and then sequentially provide the first input to select the corresponding button. This is as shown in FIG. 4.

FIG. 5B shows a state in which the user controls the volume displayed on the control plate 400. A bar-shaped control button may be operated by dragging. In this case, it may be more intuitive for the user to operate through the second input rather than the first input. The user may control a function by providing the second input on the bar when the bar-shaped control button is displayed. The bar-shaped control button may be displayed when operating functions that can be adjusted in steps or linearly, such as volume or air flow.

The first and second inputs may be provided sequentially and the functions may be selected and controlled. The user may initially provide the second input to activate a function to be selected on the control plate 400. The corresponding function may be selected by providing the first input while holding the touch on the activated function. When the corresponding function is selected, a control portion for controlling the corresponding function may be displayed on the control plate 400. The user may control the function by providing the second input.

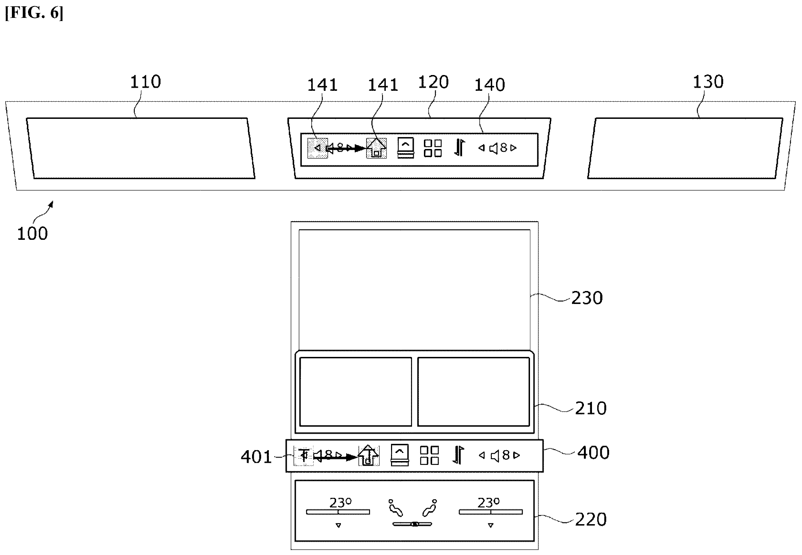

FIG. 6 is a view showing a state in which a pop-up is displayed when an input is provided to the control plate according to the embodiment of the present invention.

Referring to FIG. 6, when the user provides an input to the control plate 400, a pop-up corresponding thereto may be displayed on the windshield display 100.

When the user touches the control plate 400, an image corresponding to the shape and display of the control plate 400 may be displayed in a portion of the windshield display 100. The user may identify the location where he or she is touching through the corresponding display.

The pop-up may only be displayed when the user provides an input. The pop-up may be displayed by overlapping the content that is already displayed on the windshield display 100. For example, a navigation function may be displayed on the windshield display 100. When the user provides an input to the control plate 400, an image of the control plate 400 may be displayed in the form of a pop-up 140 so that the image of the control plate 400 overlaps the region where the navigation function is displayed.

The image of the control plate 400 displayed through the pop-up 140 may display the shape of the control plate 400 and the operating portion 410 displayed on the control plate 400. Additionally, a cursor 141 corresponding to the user's touch point may be displayed. The user may identify the location where he or she is touching through the location of the cursor 141.

In FIG. 6, a state in which the user provides a drag corresponding to the second input on the operating portion 410 of the control plate 400 is shown. In response to the user's second input, the cursor 141 in the image of the pop-up 140 may also be moved to correspond to the drag position.

The display module may recognize the seating location of the user operating the control plate 400. For example, it may determine whether the user sits in the driver's seat or the front passenger seat. This may be implemented by detecting the driver's posture or the like. Alternatively, this may be implemented by attaching an electrode to the seat and detecting the electrode that is electrically connected to the control plate 400.

The pop-up may be displayed to correspond to the user's location. For example, when a passenger sitting in the front passenger seat operates the control plate 400, the image of the pop-up 140 may be displayed in front of the front passenger seat. When the driver sitting in the driver's seat operates the control plate 400, the image of the pop-up 140 may be displayed in front of the driver's seat.

When the user sitting in the passenger seat operates the control plate 400, there may be a concern that the pop-up interferes with the driver's driving when the pop-up is displayed in front of the driver's seat. Therefore, the pop-up displayed in front of the driver's seat may only be displayed when the driver controls the control plate 400.

A haptic response may be provided to the user along with the image of the pop-up 140. The user may specifically identify his or her touch position through a vibration. The driver may operate the control plate 400 while looking ahead.

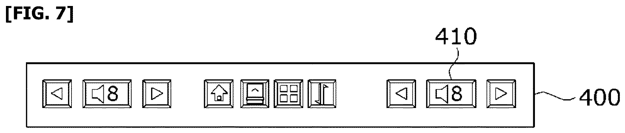

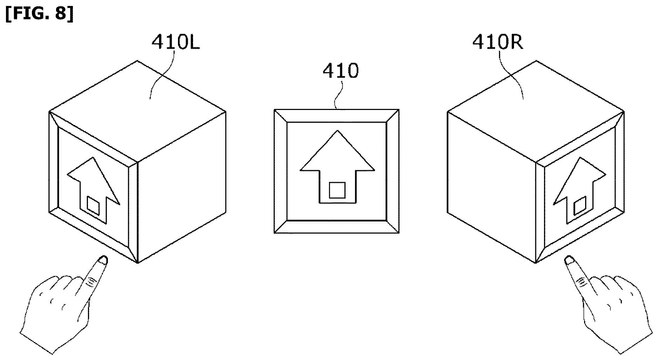

FIG. 7 is a view showing a control plate 400 according to another embodiment of the present invention, and FIG. 8 is a view showing a state in which a display changes in response to a user providing an input to the control plate 400 according to another embodiment of the present invention.

Referring to FIG. 7, the operating portion 410 displayed on the control plate 400 may be displayed as a three-dimensional (3D) image. Correspondingly, the image of the operating portion 410 included in the image of the pop-up 140 displayed when operating the control plate 400 may also be displayed as a 3D image.

As described above, the display module may detect the user's seating location. In response to this, the display of the operating portion 410 of the control plate 400 may be changed. Referring to FIG. 8, a state in which the display of the operating portion 410 changes depending on the location of the user operating the operating portion 410 is shown. In this embodiment, operation means when the user's first input or second input is provided. The operating portion 410 may be rotated a predetermined angle to a direction in which the user sits and displayed.

When the user sitting in the driver's seat operates the control plate 400 as shown in FIG. 8, an operating portion 410L may be rotated and displayed in a direction facing the driver. When the user sitting in the front passenger seat operates the control plate 400, an operating portion 410R may be rotated and displayed in a direction facing a passenger sitting in the front passenger seat.

Since the operating portion 410 is displayed as a 3D button image, when a corresponding button is selected, a button corresponding to the next step may be displayed on a side surface S of each of the buttons. The user may recognize in advance the display content of the operating portion 410 that will change when the button is selected through the corresponding display. For example, a sound bar may be displayed on the side surface S of a button that displays a loudspeaker shape to adjust the volume. The user may recognize in advance that the sound bar will appear when he or she selects the corresponding button.

When a preset time has elapsed after the operation for changing the display of the operating portion 410 is completed, the operating portion 410 may be restored to its original display. That is, the operating portion 410 may be displayed in a direction facing the front.

The above embodiment shows that the same operating portion 410 changes its angle in three dimensions. Alternatively, the button included in the operating portion 410 may be displayed differently depending on the seating location of the user operating the operating portion 410.

When the user sitting in the driver's seat operates the control plate 400, the operating portion 410 may display buttons that can operate the functions and information directly related to driving. For example, the operating portion 410 may include buttons for controlling the lamps, driving modes, navigation functions, and the like of the vehicle.

When the user sitting in the front passenger seat operates the control plate 400, the operating portion 410 may display buttons that can operate the functions and information not directly related to driving. For example, the operating portion 410 may include buttons for controlling media playback, air conditioning, and the like.

According to one embodiment of the present invention, a control plate that is disposed spaced a predetermined distance apart from a center display can operate the center display and a windshield display based on various inputs, thereby enabling easy operation by a user.

The various beneficial advantages and effects of the present invention are not limited to the above-described contents, and will be more easily understood in the process of describing specific embodiments of the present invention.

Although the present invention has been described above with reference to specific embodiments thereof, it will be understood by those skilled in the art that various modifications and changes may be made to the present invention without departing from the spirit and scope of the present invention as set forth in the claims below.

## Claims

1. A display module comprising:
a windshield display formed at a lower end of a windshield;
a center display linked to the windshield display; and
a control plate disposed in front of the center display,
wherein the control plate is disposed spaced a predetermined distance apart from a front of the center display;
wherein the control plate is configured to allow a user to operate the windshield display and the center display by providing an input to the control plate; and
wherein the control plate is configured to select a function through a first input of the user and to adjust the corresponding selected function through a second input of the user.

2. The display module of claim 1, wherein the first input comprises pressing the control plate to bring the control plate into contact with the center display.

3. The display module of claim 1 or 2, wherein the second input comprises touching a front surface of the control plate.

4. The display module of any one of claims 1 to 3, wherein the corresponding function is selected by providing the first input while activating the corresponding function in the control plate by providing the second input.

5. The display module of any one of claims 1 to 4, wherein the windshield display is configured to display a pop-up corresponding to an user input when the user provides the user input to the control plate.

6. The display module of any one of claims 1 to 5, wherein the control plate is formed of a transparent material.

7. The display module of claim 6, wherein the center display is configured to display an operating portion in a region of the center display corresponding to the control plate, and wherein the operating portion is visible to the user through the control plate.

8. The display module of claim 7, wherein the center display and the control plate are disposed between a driver seat and a front passenger seat;
wherein the control plate is configured to recognize a seating location of the user operating the control plate; and
wherein the operating portion is configured to change its display based on the seating location of the user.

9. The display module of any one of claims 5 to 8, wherein the pop-up is displayed at a location on the windshield display corresponding to a seat of the user operating the control plate.

10. The display module of any one of claims 5 to 9, wherein the pop-up includes an image of the control plate and a cursor indicating a location of a user input on the control plate.

11. A vehicle display system comprising:
a windshield display extending along a lower end of a vehicle windshield and including a plurality of display regions;
a center display operatively linked to the windshield display and disposed at a center of the vehicle between a driver's seat and a front passenger seat; and
a transparent control plate spaced a predetermined distance from a front surface of the center display,
wherein the control plate is configured to detect a first user input by contact with the center display and a second user input by touch on a front surface of the control plate;
wherein the control plate is configured to recognize a seating location of a user providing the first user input or the second user input; and
wherein the center display is configured to display an operating portion visible through the control plate, the operating portion being adjustable in orientation based on the recognized seating location of the user.

12. The system of claim 11, wherein the operating portion comprises a three-dimensional image that rotates toward the recognized seating location of the user.

13. The system of claim 11 or 12, wherein the control plate includes a transmitting portion and a touch film laminated thereon, the touch film facing the center display.

14. The system of any one of claims 11 to 13, wherein the windshield display is configured to display a pop-up in response to the first user input or the second user input, the pop-up overlapping content displayed on the windshield display.

15. The system of any one of claims 11 to 14, wherein the operating portion is configured to restore to an original orientation after a preset time following the first user input or the second user input.
